# EUROPÄISCHE PATENTANMELDUNG

(11) **EP 3 267 364 A1**
(43) Veröffentlichungstag der Anmeldung: **10.01.2018**
(21) Anmeldenummer: 17175475.7
(22) Anmeldetag: 12.06.2017
(51) Int. Cl.: G06K 9/20, G06K 9/32, G07D 7/12, G07D 7/206

(54) **VERFAHREN ZUR ERMITTLUNG DER RELATIVPOSITION EINES UV-LUMINESZIERENDEN MERKMALES AUF EINEM NICHT UV-LUMINESZIERENDEN**

(30) Priorität: 05.07.2016 AT 505962016
(71) Anmelder: AIT Austrian Institute of Technology GmbH, 1220 Wien (AT)
(72) Erfinder: VRABL, Andreas, 2333 Leopoldsdorf (DE)
(74) Vertreter: Wildhack & Jellinek

(57) **Zusammenfassung**

Die Erfindung betrifft ein Verfahren zur Ermittlung der Relativposition eines UV-lumineszierenden Merkmales (2) auf einem nicht UV-lumineszierenden Träger (1), insbesondere auf Banknoten,
- wobei der Träger (1) gleichzeitig sowohl mit UV-Licht und mit infrarotem Licht, nicht jedoch mit sichtbarem Licht, bestrahlt wird, und
- wobei ein Mehrkanalbild des Trägers (1) erstellt wird, das zumindest einen Farbkanal im sichtbaren Bereich sowie zumindest einen Farbkanal im infraroten Bereich aufweist,
- wobei ein erstes Abbild (8, 8a) des Trägers (1) oder einer auf dem Träger (1) vorhandenen Struktur im infraroten Farbkanal (6) festgestellt wird,
- wobei ein zweites Abbild (9) des UV-lumineszierenden Merkmals (2) im zumindest einen sichtbaren Farbkanal (7) festgestellt wird, und
- wobei die relative Lage der beiden Abbilder (8, 8a, 9) zueinander ermittelt wird und als Relativposition des UV-lumineszierenden Merkmals (2) auf dem nicht UV-lumineszierenden Träger (1) zur Verfügung gehalten wird.

## Beschreibung

Die Erfindung betrifft ein Verfahren zur Ermittlung der Relativposition eines UV-lumineszierenden Sicherheitsmerkmals auf einem nicht UV-lumineszierenden Träger.

Aus dem Stand der Technik ist es bekannt, lumineszierende Merkmale auf nichtlumineszierenden Trägern zu prüfen. Dies kann regelmäßig mit UV-Beleuchtung vorgenommen werden. Wird von dem Gegenstand ein RGB-Bild erstellt, so kann die Lumineszenz des Merkmals ermittelt werden. Problematisch ist im vorliegenden Zusammenhang jedoch, dass ein nicht-UV-lumineszierender Träger, wie er im Bereich des Banknotendrucks häufig vorkommt, auf dem RGB-Bild nicht sichtbar ist, wenn ausschließlich eine UV-Beleuchtung vorliegt. Es kann daher aus der so erstellten Aufnahme nicht ermittelt werden, ob das lumineszierende Merkmal an der richtigen Position gegenüber dem Träger angeordnet ist, da dieser im sichtbaren Bereich bei UV-Bestrahlung nicht sichtbar ist, da er nicht UV-lumineszierend ist.

Aufgabe der Erfindung ist es daher, ein Verfahren zur Verfügung zu stellen, mit dem die gegenseitige Positionierung des Trägers oder einer Struktur auf dem Träger und dem lumineszierenden Merkmal messbar ist.

Die Erfindung löst diese Aufgabe bei einem Verfahren zur Ermittlung der Relativposition eines UV-lumineszierenden Sicherheitsmerkmals auf einem nicht UV-lumineszierenden Träger, insbesondere bei Banknoten, mit den Merkmalen des Patentanspruchs 1.

Erfindungsgemäß ist bei einem Verfahren zur Ermittlung der Relativposition eines UV-lumineszierenden Merkmales (2) auf einem nicht UV-lumineszierenden Träger (1), insbesondere auf Banknoten, vorgesehen,
- dass der Träger (1) gleichzeitig sowohl mit UV-Licht und mit infrarotem Licht, nicht jedoch mit sichtbarem Licht, bestrahlt wird, und
- dass ein Mehrkanalbild des Trägers (1) erstellt wird, das zumindest einen Farbkanal im sichtbaren Bereich sowie zumindest einen Farbkanal im infraroten Bereich aufweist,
- dass ein erstes Abbild (8, 8a) des Trägers (1) oder einer auf dem Träger (1) vorhandenen Struktur im infraroten Farbkanal (6) festgestellt wird,
- dass ein zweites Abbild (9) des UV-lumineszierenden Merkmals (2) im zumindest einen sichtbaren Farbkanal (7) festgestellt wird, und
- dass die relative Lage der beiden Abbilder (8, 8a, 9) zueinander ermittelt wird und als Relativposition des UV-lumineszierenden Merkmals (2) auf dem nicht UV-lumineszierenden Träger (1) zur Verfügung gehalten wird.

Zur vorteilhaften Unterscheidung unterschiedlicher Lumineszenzeffekte kann vorgesehen sein, dass zur Erstellung der Abbilder (8, 8a, 9) eine Mehrkanalkamera herangezogen wird, wobei jedes Sensorpixel der Mehrkanalkamera jeweils einen Sensor für den infraroten Bereich sowie zumindest einen Sensor für den sichtbaren Bereich aufweist.

Um eine vorteilhafte Aufnahme einer Vielzahl von Trägern mit UV-lumineszierenden Merkmalen zu erhalten, kann vorgesehen sein, dass der Träger (1) während der Aufnahme gegenüber der Aufnahmeeinheit bewegt wird.

Eine bevorzugte Ausführungsform der Erfindung ist anhand der folgenden Zeichnungsfiguren näher dargestellt:
**Fig. 1** zeigt einen nicht UV-lumineszierenden Träger 1, auf dem ein UV-lumineszierendes Merkmal 2 aufgebracht ist.
**Fig. 2** zeigt eine Anordnung mit zwei Lichtquellen an einer Kamera, die zur Ermittlung der Relativposition des UV-lumineszierenden Merkmals 2 auf einem nicht UV-lumineszierenden Träger 1 verwendet wird.
**Fig. 3** zeigt vorteilhaft das Vorgehen bei der Ermittlung der Relativposition des UV-lumineszierenden Merkmals 2.

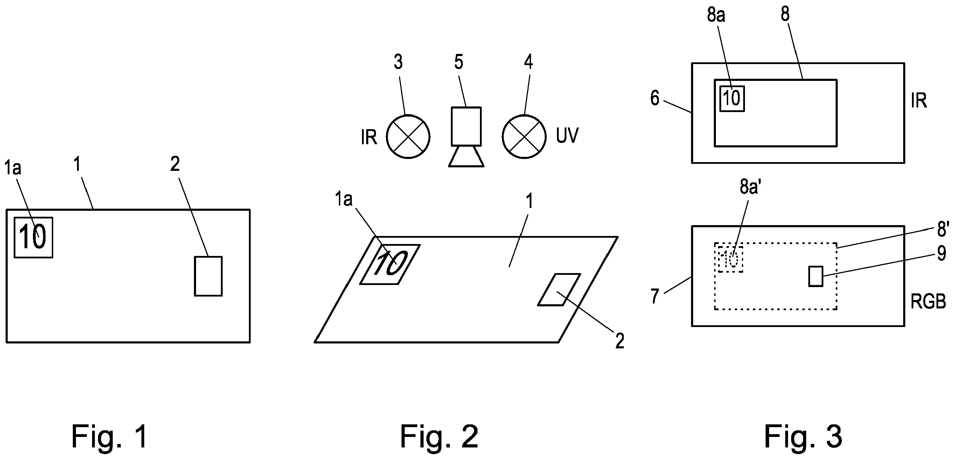

In **Fig. 1** ist ein aus dem Stand der Technik bekannter nicht UV-lumineszierender Träger 1, im vorliegenden Fall eine Banknote, dargestellt. Banknoten-Papier ist nicht UV-lumineszierend, herkömmliches modernes Papier aufgrund diverser Inhaltsstoffe hingegen üblicherweise schon. Auf dieser Banknote befindet sich ein UV-lumineszierendes Sicherheitsmerkmal 2.

Bei der hier dargestellten vorteilhaften Ausführungsform der Erfindung (**Fig. 2**) wird der Träger 1 bewegt. Feststehend sind eine Infrarotlichtquelle 3 idealerweise mit einer Lichtwellenlänge im Bereich von 800 nm bis 1000 nm, eine UV-Lichtquelle 4 idealerweise mit einer Lichtwellenlänge im Bereich von 280 nm bis 300 nm sowie eine Kamera 5 dargestellt. Die Kamera ist zur Erstellung eines Mehrkanalbilds des Trägers 1 ausgebildet. Dieser weist im vorliegenden besonderen Ausführungsbeispiel drei Farbkanäle im sichtbaren Bereich auf, namentlich einen roten, einen grünen und einen blauen Farbkanal. Weiters weist das von der Kamera 5 erstellte Mehrkanalbild auch einen Farbkanal im infraroten Bereich auf.

Bei der hier verwendeten Kamera 5 kann es sich entweder um eine Zeilenkamera handeln, die den sich vorbei bewegenden Träger 1 zeilenweise abtastet und derart ein Flächenbild erstellt. Die verwendete Kamera 5 kann jedoch auch eine Flächenkamera sein, die zu einem bestimmten Zeitpunkt, an dem sich der Gegenstand an der Kamera 5 vorbei bewegt, ein Bild erstellt. Alternativ ist es auch möglich, dass der Träger 1 gegenüber der Kamera 5 und den beiden Lichtquellen 3, 4 überhaupt stillsteht und derart ein Mehrkanalbild erstellt wird.

In einem ersten, in **Fig. 3** dargestellten Schritt wird ein erstes Abbild 8 eines Trägers 1 festgestellt, und zwar durch Analyse des infraroten Farbkanals 6 des Mehrkanalbilds. Im vorliegenden Ausführungsbeispiel kann das erste Abbild 8 des gesamten Trägers 1 festgestellt werden, indem im infraroten Farbkanal 6 nach einer rechteckigen Struktur einer vorgegebenen Größe gesucht wird. Die Pixel des infraroten Farbkanals sind für Licht im Bereich von ca. 800 bis 1000 nm sensitiv. Eine solche im infraroten Farbkanal 6 aufgefundene Struktur kann als erstes Abbild 8 des Trägers 1 detektiert werden. Es besteht auch die Möglichkeit, anstelle des Abbilds des gesamten Trägers 1 oder zusätzlich auch das Abbild 8a einer auf dem Träger 1 vorhandenen Struktur 1a als erstes Abbild gesucht werden. Im vorliegenden Ausführungsbeispiel kann eine solche Struktur 1a beispielsweise durch den Wertaufdruck "10" auf einer Banknote realisiert sein.

In weiterer Folge wird ein zweites Abbild 9 des UV-lumineszierenden Merkmals 2 in einem der sichtbaren Farbkanäle 7 festgestellt. In einem weiteren Schritt wird die relative Lage der beiden Abbilder 8, 8a, das heißt des Abbilds 8 des Trägers 1 bzw. des Abbilds 8a der auf dem Träger 1 befindlichen Struktur 1a sowie des Abbilds des UV-lumineszierenden Merkmals zueinander festgestellt. Das Abbild 8 des Trägers 1 sowie das Abbild 8a der auf dem Träger 1 vorhandenen Struktur 1a ist in **Fig. 3** zur Veranschaulichung der relativen Lage punktiert dargestellt. Im sichtbaren Farbkanal 7 ist dieses nicht sichtbar.

Ist die relative Lage des ersten und zweiten Abbilds 8, 8a, 9 zueinander bekannt, so kann aufgrund dieser relativen Lage darauf geschlossen werden, ob ein Druck eines UV-lumineszierenden Merkmals, insbesondere eines UV-lumineszierenden Sicherheitsmerkmals auf einer Banknote, richtig aufgebracht ist. Ist dies der Fall, kann der betreffende Träger 1, insbesondere die betreffende Banknote, als gültig erkannt werden. Insbesondere kann die relative Lage bzw. Relativposition mit dem Sollwert verglichen werden. Ist die Abweichung der ermittelten Lage vom Sollwert kleiner als ein vorgegebener Schwellenwert, wird der betreffende Träger 1 mit seinem UV-lumineszierenden Merkmal 2 als gültig erkannt.

## Patentansprüche

1. Verfahren zur Ermittlung der Relativposition eines UV-lumineszierenden Merkmales (2) auf einem nicht UV-lumineszierenden Träger (1), insbesondere auf Banknoten,
- wobei der Träger (1) gleichzeitig sowohl mit UV-Licht und mit infrarotem Licht, nicht jedoch mit sichtbarem Licht, bestrahlt wird, und
- wobei ein Mehrkanalbild des Trägers (1) erstellt wird, das zumindest einen Farbkanal im sichtbaren Bereich sowie zumindest einen Farbkanal im infraroten Bereich aufweist,
- wobei ein erstes Abbild (8, 8a) des Trägers (1) oder einer auf dem Träger (1) vorhandenen Struktur im infraroten Farbkanal (6) festgestellt wird,
- wobei ein zweites Abbild (9) des UV-lumineszierenden Merkmals (2) im zumindest einen sichtbaren Farbkanal (7) festgestellt wird, und
- wobei die relative Lage der beiden Abbilder (8, 8a, 9) zueinander ermittelt wird und als Relativposition des UV-lumineszierenden Merkmals (2) auf dem nicht UV-lumineszierenden Träger (1) zur Verfügung gehalten wird.

2. Verfahren nach Anspruch 1, **dadurch gekennzeichnet, dass** zur Erstellung der Abbilder (8, 8a, 9) eine Mehrkanalkamera herangezogen wird, wobei jedes Sensorpixel der Mehrkanalkamera jeweils einen Sensor für den infraroten Bereich sowie zumindest einen Sensor für den sichtbaren Bereich aufweist.

3. Verfahren nach einem der vorangehenden Ansprüche, **dadurch gekennzeichnet, dass** der Träger (1) während der Aufnahme gegenüber der Aufnahmeeinheit bewegt wird.
